# EUROPEAN PATENT APPLICATION

(11) **EP 4 378 748 A1**
(43) Date of publication of application: **05.06.2024**
(21) Application number: 22210891.2
(22) Date of filing: 01.12.2022
(51) Int. Cl.: B60L 58/10, B60L 58/12, B60L 58/21, B60L 58/22, H02J 7/00

(54) **A METHOD AND A SYSTEM FOR CHARGING AN ELECTRICAL ENERGY STORAGE SYSTEM**

(71) Applicant: VOLVO TRUCK CORPORATION, 405 08 Göteborg (SE)
(72) Inventor: HALLBERG, Linus, 423 73 SÄVE (SE); SINGH, Gurpreet, 421 39 VÄSTRA FRÖLUNDA (SE)
(74) Representative: Kransell & Wennborg KB

(57) **Abstract**

The present disclosure relates to a computer-implemented method and a system for charging an electrical energy storage system (2) comprising more than one electrical energy storage pack (14) connected to a traction voltage bus (16) of a vehicle.

## Description

### TECHNICAL FIELD

The disclosure relates generally to electrical energy storage systems. In particular aspects, the disclosure relates to a method and a system for charging an electrical energy storage system The disclosure can be applied in heavy-duty vehicles, such as trucks, buses, and construction equipment. Although the disclosure may be described with respect to a particular vehicle, the disclosure is not restricted to any particular vehicle.

### BACKGROUND

Batteries are becoming a more common source of power for providing propulsion power to vehicles. Such batteries are rechargeable batteries and consist of several battery cells that may be connected in series and/or in parallel forming a complete battery pack for the vehicle.

In a multi-pack battery system, it is difficult to charge all packs to the same state of charge, SOC. This is due to that the open circuit voltage versus state of charge curves and internal resistances of the battery packs is often different between battery packs that cause either slow charging or charging of less energy than expected for some of the battery packs.

### SUMMARY

An object of the invention is to provide an improved method for charging a multi-pack electrical energy storage system.

According to a first aspect of the disclosure, there is provided a computer-implemented method for charging an electrical energy storage system comprising more than one electrical energy storage pack connected to a traction voltage bus of a vehicle, the method comprising: charging the electrical energy storage system until a charge rate of any one of the electrical energy storage packs drops below a threshold level; grouping the electrical energy storage packs according to their charge rates, where the charge rates in each group has an intra group spread less than a predetermined margin, (a) disconnecting all but one group of electrical energy storage packs from charging; (b) charging the one group with at least one sequence of a charge pulse followed by a discharge pulse for a predetermined time duration for each pulse, the energy of the discharge pulse is lower than the energy for the charge pulse, wherein the last pulse of the charging is a discharge pulse, (c) after a resting period, estimating with a relaxed voltage estimator, an at least partly relaxed discharge open circuit voltage of the one group from a voltage increase caused by the charging step, (d) repeating steps (b) and (c) until the estimated relaxed discharge open circuit voltage of the one group reaches to or exceeds a predetermined operational voltage limit, and (e) repeating the steps (a)-(d) for all groups of electrical energy storage packs until each electrical energy storage pack have an estimated relaxed discharge open circuit voltage equal to or exceeding the predetermined operational voltage limit.

The first aspect of the disclosure seeks to improve a charging process for an electrical energy storage system. A technical benefit is that the amount of energy content stored in an electrical energy storage system is increased without violating critical operational voltage limits. Such critical operational voltage limits are necessarily higher than the predetermined operational voltage limit.

Most commonly, a charge protocol is used for charging which makes sure that the voltages of the energy storage packs are balanced in terms of voltage according to a SOC-OCV-curve. Contrary to this, the present disclosure is at least partly based on the realization to allow the energy storage packs to be at a maximal operational voltage limit when at a discharge OCV curve. This utilizes the fact that OCV vs SOC curves are experiencing a hysteresis and are different after charging compared to after discharging. Furthermore, using pulse charging allows for charging at higher voltages without violating healthy voltage levels compared to using constant voltage charging. Thus, healthy pulse voltage levels are higher than healthy constant voltage levels, whereby charging speed is possibly faster using pulses.

A sequence of a charge pulse followed by a discharge pulse is preferably a single charge pulse and a consecutive single discharge pulse. The duration of the charge pulse and discharge pulse depends on the charge- discharge rate of each pulse. However, if the charge rate is equal to the discharge rate, then the duration of the charge pulse is longer than the duration of the discharge pulse. A charge pulse adds energy to the electrical energy storage pack whereas a discharge pulse withdraws energy from the electrical energy storage pack. The energy of the charge pulse is larger than that of the discharge pulse so that an overall energy is added to the group of electrical energy storage packs.

A voltage limit for the charge pulses is typically higher than the normal operation voltage limit of the electrical energy storage packs.

An intra group spread means the spread of charge rates of the electrical energy storage packs in a group of electrical energy storage packs, such as the relative or absolute difference between the maximum charge rate and the minimum charge rate of the group. It is desirable that the charge rates within each group are similar as determined by the predetermined margin.

A charge rate may be quantified by the commonly used C-rate.

In some examples, once the estimated relaxed discharge open circuit voltage of the one group reaches to or exceeds the predetermined operational voltage limit: determining a final relaxed discharge open circuit voltage of each electrical energy storage pack of the one group, wherein, if the final relaxed discharge open circuit voltage under- or overshoot the predetermined operational voltage limit with more than a set margin, retuning the relaxed voltage estimator for each electrical energy storage pack of the one group, retuning is repeated for each the electrical energy storage pack in all groups. A technical benefit may include that the lifetime of the energy storage system is increased. This is due to that the voltage estimator used during operation of the energy storage system is tuned to the correct relaxed open circuit voltage, with some margin.

In some examples, the charge rate threshold level is that any one electrical energy storage packs drop to about 50% or less than the charge rate of at least one of the other electrical energy storage packs. A technical benefit may include to start the charging method at an optimal time so that charging can be performed relatively fast, i.e., in less time than if the method is initiated too soon or too late.

In some examples, the charge rate threshold level is an absolute charge rate level. The absolute charge rate level is about 0.1 C. This is an alternative to the 50% limit discussed above.

In some examples, wherein the power discharge pulses are provided every about 10s-30s. This has proven to provide for a fast and efficient charging process. The sequence of a single charge pulse and single discharge pulse may thus be reinitiated every about 10s-30s.

In some examples, the resting period is about 5s or less. This provides for an overall fast charging process while still allowing sufficient resting so that an accurate relaxed OCV can be measured. In one example, the resting period is about 2s, and in some examples the resting period is 2s or less. The resting period may be tuned based on the accuracy of the relaxed voltage estimator. If an estimated relaxed open circuit voltage deviates more than a predefined threshold from a final relaxed discharge open circuit voltage, the resting period may be iteratively tuned until the accuracy of the relaxed voltage estimator, i.e., the deviation, is within acceptable boundaries.

In some examples, the discharge pulse charges are applied with about 0.1C to 1C for less than a time duration in the range of 1s to 2s. This advantageously provides for discharging the energy storage packs with high energy for a short period of time without violating healthy voltage limits.

Each charge pulse may for example have a time duration of 10 seconds. It is also envisaged that the charge pulse have a time duration of more than 10 seconds, such as 12 seconds, or 15 seconds, or more than or approximately 18 seconds.

In some examples, the predetermined margin is that the intragroup spread is equal to or less than about 5% in charge rate. A technical benefit may include that a with a relatively small spread, the overall charging process is faster and provides for more balanced state of charge of the final charged energy storage system.

In some examples, a charge energy of the charge pulse may contain at least 5 times more energy than the discharge energy the discharge pulse. In further examples, a charge energy of the charge pulse may contain at least 10 times more energy than the discharge energy the discharge pulse. The ratio between the energy of the charge pulse and the discharge energy of the discharge pulse may be tuned so that a fast charging is enabled.

With examples provided herein, the relaxed discharge open circuit voltage is measured in a discharging phase of an open circuit voltage hysteresis.

In some examples, the charge pulse is immediately followed by the discharge pulse. Preferably, no delay, or at least no intentional delay is introduced between the charge pulse and the discharge pulse.

In some examples, charging the electrical energy storage system until a charge rate of any one of the electrical energy storage packs drops below a threshold level comprises charging using constant current constant voltage (CCCV) charging.

According to a second aspect of the disclosure, there is provided a system for configured to charge an electrical energy storage system comprising more than one electrical energy storage pack connected to a traction voltage bus of a vehicle, the system comprising: a set of sensors configured to measure a voltage of the electrical energy storage packs individually or in groups of electrical energy storage packs; a switching arrangement configured to control which of the electrical energy storage packs is/are connected to the traction voltage bus; a traction voltage component connected to the traction voltage bus and being controllable to discharge the electrical energy storage packs; a charger configured to electrically charge the electrical energy storage packs, wherein the system is configured to: charge, using the charger, the electrical energy storage system until a charge rate of any one of the electrical energy storage packs measured by the sensors drops below a threshold level; (a) disconnect, using the switching arrangement, all but one group of electrical energy storage packs from the traction voltage bus, where the charge rates in the group have an intra group spread less than a predetermined margin, (b) charge, using the charger, the one group with a charge pulse followed by a discharge pulse for a predetermined time duration for each pulse, the energy of the discharge pulse is lower than the energy for the charge pulse, wherein the last pulse of the charging is a discharge pulse, (c) after a resting period, estimate, using the set of sensors and the traction voltage component and a relaxed voltage estimator, an at least partly relaxed discharge open circuit voltage of the one group from a voltage increase caused by the charging, (d) repeating steps (a), (b), and (c) until the estimated relaxed open circuit voltage of the one group reaches to or exceeds a predetermined operational voltage limit, and (e) repeating the steps (a)-(d) for all groups of electrical energy storage packs until each electrical energy storage pack have a relaxed open circuit voltage equal to or exceeding the predetermined operational voltage limit.

In one example implementation, the system is further configured to: once the estimated relaxed discharge open circuit voltage of the one group reaches to or exceeds the predetermined operational voltage limit, determine, using the set of sensors, the traction voltage component, and a relaxed voltage estimator, a final relaxed discharge open circuit voltage of each electrical energy storage pack of the one group, and if the final relaxed discharge open circuit voltage under- or overshoot the predetermined operational voltage limit with more than a set margin, retune the relaxed voltage estimator for each electrical energy storage pack of the one group, and repeating the retuning for each electrical energy storage pack in all groups.

Effects and features of the second aspect of the disclosure are largely analogous to those described above in relation to the first aspect of the disclosure.

According to a third aspect there is provided a vehicle comprising the system according to the second aspect.

According to a fourth aspect there is provided a computer program product comprising program code for performing, when executed by the processor device, the method of any of the examples of the first aspect when said program is run on a computer.

According to a fifth aspect there is provide a non-transitory computer-readable storage medium comprising instructions, which when executed by the processor device, cause the processor device to perform the method of any of the examples of the first aspect.

According to a sixth aspect there is provided a control unit for controlling a charging an electrical energy storage system comprising more than one electrical energy storage packs connected to a traction voltage bus of a vehicle, the control unit being configured to perform the steps of the method of any of the examples of the first aspect.

Effects and features of the third, fourth, fifth, and sixth aspects are largely analogous to those described above in relation to the first aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is a vehicle according to one example;
**FIG. 2** is a system diagram of a system according to one example;
**FIG. 3** is a block-diagram of a system according to one example;

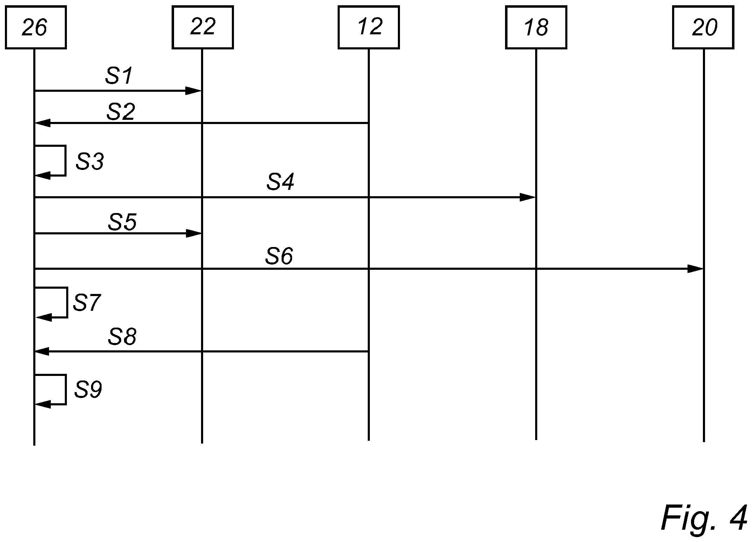

**FIG. 4** is a block sequence diagram according to one example;
**FIG. 5** is a flow-chart of method steps according to one example;
**FIG. 6A** is an OCV-SOC graph showing a charge curve and a discharge curve;
**FIG. 6B** conceptually illustrates a single sequence of a charge pulse and a discharge pulse;
**FIG. 7** is another view of **FIG. 2****,** according to another example;
**FIG. 8** is a flow chart of an exemplary method to charge an electrical energy storage system according to one example; and
**FIG. 9** is a schematic diagram of an exemplary computer system for implementing examples disclosed herein, according to one example.

### DETAILED DESCRIPTION

Aspects set forth below represent the necessary information to enable those skilled in the art to practice the disclosure.

When charging of electrical energy storages including several electrical energy storage packs, e.g., battery packs, it is desirable that the state of charge of the battery packs are balanced once charging is completed. The most common approach is to use a charge protocol that rely on that the batteries are balanced in terms of their charge open circuit voltage. However, the inventors realized that more energy may be stored by the battery packs if the discharge open circuit voltage is considered instead of the charge open circuit voltage due to that the OCV vs SOC curves are experiencing a hysteresis and are different after charging compared with after discharging. Examples provided herein lays out improvements for charging electrical energy storage systems of electrified vehicles.

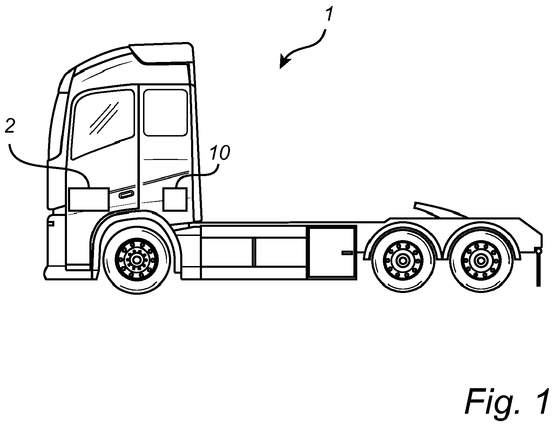

Fig. 1 illustrates a vehicle in the form of an electrical truck 1 comprising a propulsion electrical energy storage system 2 comprising more than one electrical energy storage pack connected to a traction voltage bus of the vehicle 1. Each electrical energy storage pack generally comprising a plurality of series and parallel connected electrical energy storage cells. The propulsion electrical energy storage 2 is arranged to provide power to an electrical engine (not shown) arranged for providing propulsion for the electrical truck 1. The electrical truck 1 further comprises an electrical energy storage managing system 10 which is configured to monitor electrical energy storage cell characteristics such as state of charge (SOC), state of health (SOH), open circuit voltage (OCV), temperature of the electrical energy storage cells, etc. The propulsion electrical energy storage 2 may be a Li-ion electrical energy storage system comprising multiple cells electrically connected in series and in parallel.

Although the vehicle in fig. 1 is depicted as a heavy-duty truck, embodiments of the present disclosure may as well be implemented in other types of vehicles, such as in busses, lightweight trucks, passenger cars, construction equipment, industrial applications, and marine applications including e.g. vessels or ships.

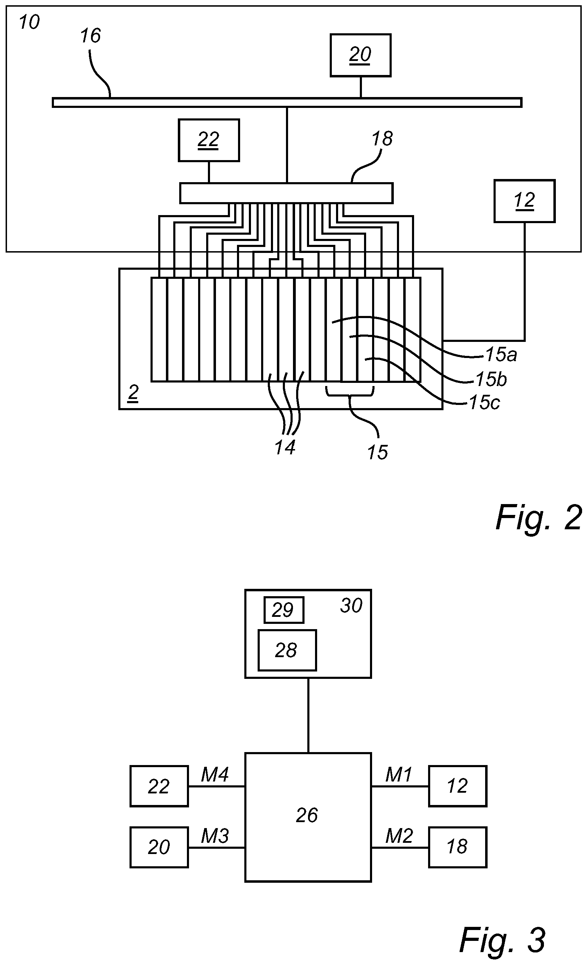

FIG. 2 is an exemplary system diagram of a system 10 of the vehicle 1 according to one example. The system 10 comprises a set of sensors 12 configured to measure a voltage of the electrical energy storage packs 14 individually or in groups of electrical energy storage packs 14. The electrical energy storage system 2 which comprises the electrical energy storage packs 14 is electrically connected to a traction voltage bus 16 via a switching arrangement 18 included in the system 10. The switching arrangement 18 is configured to control which of the electrical energy storage packs 14 is/are connected to the traction voltage bus 16. The switching arrangement 18 comprises switches, circuit breakers, and contactors as required by the specific implementation.

The system 10 further comprises a traction voltage component 20 connected to the traction voltage bus 16 and being controllable to discharge the electrical energy storage packs 14. The traction voltage component 20 may for example be an electric machine that can be operated in an inefficient mode creating heat for a very short time for discharging the electrical energy storage packs 14.

Further, the system 10 comprises a charger 22 configured to electrically charge the electrical energy storage packs 14.

Turning now to fig. 3 depicting a block-diagram of a control unit 26 communicatively connected to the sensors 12, the switching arrangement 18, the traction voltage component 20 and the charger 22. The control unit 26 may, through suitable communication architectures, such as a CAN bus, request and/or receive sensing signals or messages M1 from the sensors 12 indicating a voltage of an electrical energy storage pack 14. Further, the control unit 26 is connected to the switching arrangement 18 and may control, by sending control signals or messages M2 to the switching arrangement 18, which of the electrical energy storage packs 14 that are presently connected to the traction voltage bus. The control unit 26 is connected to the traction voltage component 20 and may control the traction voltage component 20 to operate as a load on the electrical energy storage packs 14 presently connected to the traction bus 16, by sending control signals or messages M3 to the traction voltage component 20. In addition, the control unit 26 is connected to the charger 22 to control, by transmitting control signals or messages M4 to the charger, to supply charge to selected electrical energy storage packs 14.

The control unit 26 has access to software components 28 storage in a memory device 30 accessible to the control unit 26. The software components 28 for example includes a relaxed open circuit voltage estimator. A voltage estimator is a model, typically a mathematical model of an electrical energy storage pack that is configured to estimates the voltage relaxation. There are for example known Kalman filter algorithms that serve as voltage estimators.

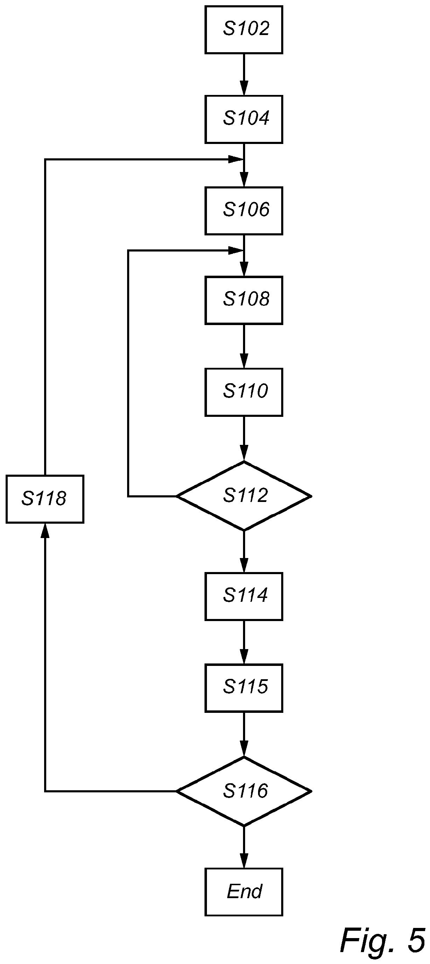

Fig. 5 is a sequence diagram illustrating a processing and control flow of examples discussed herein. Once charging of the electrical storage system is requested by the control unit 26 transmits a control signal S 1 to the charger 22 to initiate charging of the electrical energy storage system 2. Meanwhile the sensor 12 transmits requested sensing data via data signal S2 to the control unit 26. Charging is continued until a charge rate of any one of the electrical energy storage packs 14 drops below a threshold level.

Subsequently, the control unit groups, based on the sensing data received from the sensors 12, the electrical energy storage packs 14 according to their charge rates. The grouping is based on an evaluation S3 performed the control unit 26 so that the charge rates in each group has an intra group spread less than a predetermined margin.

Next, the control unit 26 transmits a control signal S4 to the switching arrangement 18 to disconnect all but one group of electrical energy storage packs 14 from charging.

The control unit 26 subsequently transmits a control signal S5 to the charger 22 and a control signal S6 to the traction component 20, e.g., a discharger, to initiate a sequence of a charge pulse followed by a discharge pulse for a predetermined time duration for each pulse provided to the group of electrical energy storage packs 14. The energy of the discharge pulse is lower than the energy for the charge pulse, wherein the last pulse of the charging is a discharge pulse.

After a resting period S7, the control unit 26 estimates S9 using requested sensing signals S8 from the sensors 12 and a relaxed voltage estimator, an at least partly relaxed discharge open circuit voltage of the one group from a voltage increase caused by the charging step.

The control unit 26 repeatably returns to transmitting a control signal S5 to the charger 22 and a control signal S6 to the traction component 20, and the subsequent estimation S9 using requested sensing signals S8 until the estimated relaxed discharge open circuit voltage of the one group reaches to or exceeds a predetermined operational voltage limit.

Next, the control unit 26 repeats the method for all groups of electrical energy storage packs until each electrical energy storage pack have an estimated relaxed discharge open circuit voltage equal to or exceeding the predetermined operational voltage limit.

Fig. 5 is a flow-chart according to an example method disclosed herein.

In step S102, charging the electrical energy storage system 2 until a charge rate of any one of the electrical energy storage packs 14 drops below a threshold level. The charge rate threshold level may be implemented in different ways. In one example, the charge rate threshold is that any one electrical energy storage packs 14 drop to about 50% or less than the charge rate of at least one of the other electrical energy storage packs 14. Thus, in this example a relative charge rate threshold is suggested. In another example, the charge rate threshold level is an absolute charge rate level. The absolute charge rate level may be independent of the relative relationship between charge rates of separate electrical energy storage packs 14. According to one example, the absolute charge rate level is about 0.1 C. The charging in step S 102 may be performed using constant current constant voltage (CCCV) charging.

Further, in step S104, grouping the electrical energy storage packs 14 according to their charge rates, where the charge rates in each group 15 have an intra group spread less than a predetermined margin. Fig. 6C is a graph showing charge rates for the electrical energy storage packs 15a-c of the group 15. The spread 615 is less than the predetermined margin. Fig. 2 illustrates an example group 15 of electrical energy storage packs 14. Software components 28 accessible to the control unit 26 may for this purpose have access to identification addresses 29 for each of the electrical energy storage packs 14 so that they can be identified and connected/disconnected to the voltage traction bus 14 independently. Once the group is identified, this group is jointly addressed by the control unit 26. In some examples, the predetermined margin is that the intragroup spread is equal to or less than about 5% in charge rate.

In step S106, all but one group 15 of electrical energy storage packs 14 is disconnected from charging. Thus, only one of the groups is now connected to the charger 22, as controlled by the control unit 26. Charging the electrical energy storage packs 14 in groups of packs having similar charge rates facilitates achieving a balanced group of packs 14 in less time than if the charge rates are broader distributed.

In step S108, charging the one group with at least one sequence of a charge pulse followed by a discharge pulse for a predetermined time duration for each pulse. The energy of the discharge pulse is lower than the energy for the charge pulse. Further, the last pulse of the charging is a discharge pulse. The duration of a sequence may vary, but as a reference a discharge pulse may be provided every about 10s-30s. Thus, with one charge pulse and one discharge pulse for each sequence, the duration of a sequence may also be about 10s-30s.

Preferably, a charge energy of the charge pulse may contain at least 5 times more energy than the discharge energy the discharge pulse. In some examples, a charge energy of the charge pulse may contain at least 10 times more energy than the discharge energy of the discharge pulse. The relationship between the duration and rate of the charge and discharge depends on the implementation at hand, but the energy relationship should be such that energy is overall added and not withdrawn from the electrical energy storage packs 14. In one example, each discharge pulse is applied with about 0.1C to 1C for less than a time duration in the range of 1s to 2s.

After the charging in step S108, the one group of electrical energy storage packs 14 are allowed a resting period. The resting period is typically of the order of a few seconds, such as about 2s, about 3s, about 4s, or about 5s. By allowing a brief resting period, the relaxed discharge open circuit voltage is measured in a discharging phase of an open circuit voltage hysteresis.

After the resting period, the method proceeds to step S 110 including estimating with a relaxed voltage estimator 28, an at least partly relaxed discharge open circuit voltage of the one group from a voltage increase caused by the charging step. The resting period thus allows for measuring an at least partly relaxed discharge open circuit voltage, depending on the duration of the resting period.

The steps S 108 and S 110 are repeated until the estimated relaxed discharge open circuit voltage of the one group reaches to or exceeds a predetermined operational voltage limit. This, block S 112 includes to evaluate, by the control unit 26, in each cycle of the method whether the estimated relaxed discharge open circuit voltage of the one group has reached to or exceeds the predetermined operational voltage limit. If not affirmative, the method repeats steps S108 and S 110 until the outcome of the evaluation in step S 112 is positive.

Optionally, in some example implementations, the method includes a step S 114. Once the estimated relaxed discharge open circuit voltage of the one group reaches to or exceeds the predetermined operational voltage limit in evaluation step S 112, step S 114 comprises determining a final relaxed discharge open circuit voltage of each electrical energy storage pack of the one group, as can be determined by voltage measurements and algorithms 28 accessible to the control unit 26. If the final relaxed discharge open circuit voltage under- or overshoot the predetermined operational voltage limit with more than a set margin, retuning, in step S 115, the relaxed voltage estimator for each electrical energy storage pack of the one group. The retuning is repeated for each electrical energy storage pack in all groups.

Next, the method repeats the steps S106, S108, S 110, and S 112 for the next group. Thus, block S 116 includes to evaluate if all groups of electrical energy storage packs 14 have been charged, and if this is the case, the method is ended. However, if not all groups have been charged, the method proceeds to block S 118 which includes to select a next group of electrical energy storage packs 14 for which the method repeats the steps S 106, S 108, S 110, and S 112, and optionally step S 114. The method is repeated until each electrical energy storage pack have an estimated relaxed discharge open circuit voltage equal to or exceeding a predetermined operational voltage limit.

The predetermined operational voltage limit depends on the electrical energy storage chemistry and structure and is tested and determined from cell lifetime tests. A typical but non-limiting example is 4.1-4.3V/cell for NCA (nickel cobalt aluminum oxide) or NMC (Lithium Nickel Manganese Cobalt Oxide) Li-ion batteries.

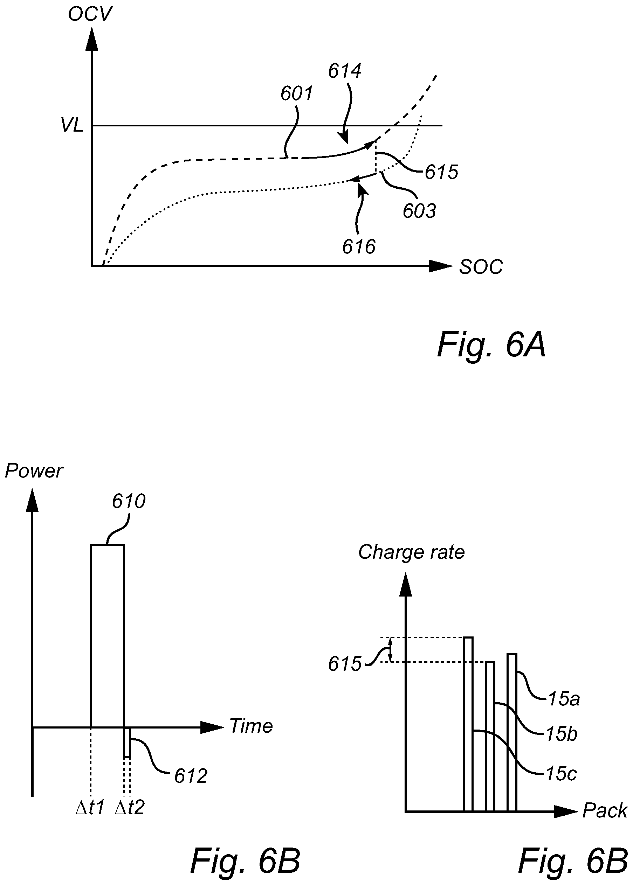

Fig. 6A is a graph illustrating two conceptual OCV vs SOC curves, a first curve 601 being a charge curve and the second curve 603 being a discharge curve. It is known that OCV vs SOC curves are experiencing a hysteresis and are different after charging, curve 601, compared with after discharging, curve 603. With examples discussed herein, charging of the electrical energy storage packs is aimed to reach the predetermined operational voltage limit, VL, on the discharge curve 603. The SOC on the discharge curve 603 is higher than the SOC on the charge curve 601 at the predetermined operational voltage limit, VL.

Fig. 6B is a graph of a charge pulse 610 immediately followed by a discharge pulse 612, preferably with no intentional delay between the pulses. The graph shows power as a function of time, where the integral of each pulse is the energy of that pulse. By applying the single charge pulse 610, followed by the discharge pulse 612, the charge curve 601 is firstly followed at 614 to larger SOC and OCV, while during the subsequent discharge pulse 612, the OCV drops along 615 to the discharge curve 603 which is followed at 616 towards lower SOC and OCV. In a subsequent iteration, the discharge pulse 612 may push the OCV to above the predetermined operational voltage limit, VL on the charge curve 601, but after the followed discharge pulse 612, the discharge OCV may fall below the predetermined operational voltage limit, VL, but to a level higher than before the preceding charge pulse. This is repeated until the OCV of the discharge curve 603, after the discharge pulse, is at or above the predetermined operational voltage limit, VL. In other words, using the proposed charging scheme allows for adding more energy to the electrical energy storage system without violating critical voltage limits of the electrical energy storage packs. Stated otherwise, the proposed charging scheme allows for reaching a higher SOC without violating critical voltage limits of the electrical energy storage packs.

The discharge pulse 612 is lower in amplitude than the charge pulse 610 and the duration (Δt2) of the discharge pulse 612 is shorter than the duration (Δt1) of the charge pulse 610. The duration (Δt2) of the discharge pulse 612 may be about 1 second and the duration (Δt1) of the charge pulse 610 may be about 10 seconds.

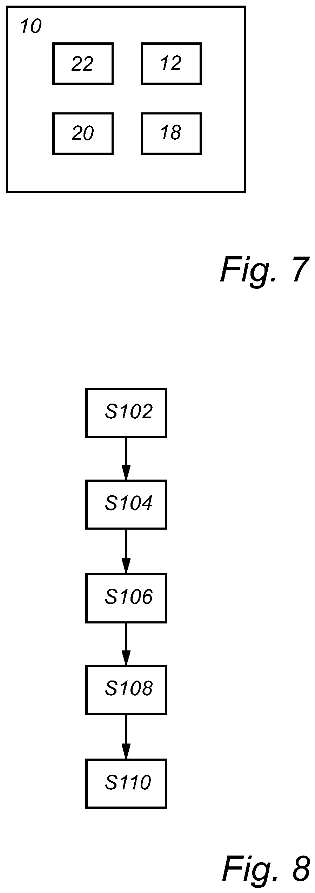

**FIG.** 7 is another view of **FIG. 2****,** according to another example. **Fig. 7** illustrates a system configured to charge an electrical energy storage system comprising more than one electrical energy storage packs connected to a traction voltage bus of a vehicle. The system 10 comprises a set of sensors 12 configured to measure a voltage of the electrical energy storage packs individually or in groups of electrical energy storage packs. A switching arrangement 18 configured to control which of the electrical energy storage packs are connected to the traction voltage bus. A traction voltage component 20 is connected to the traction voltage bus and being controllable to discharge the electrical energy storage packs. A charger 22 configured to electrically charge the electrical energy storage packs.

The system 10 is configured to: charge, using the charger 20, the electrical energy storage system until a charge rate of any one of the electrical energy storage packs measured by the sensors drops below a threshold level. Disconnect, using the switching arrangement 18, all but one group of electrical energy storage packs from the traction voltage bus, where the charge rates in the group have an intra group spread less than a predetermined margin. Charge, using the charger 22, the one group with a charge pulse followed by a discharge pulse for a predetermined time duration for each pulse, the energy of the discharge pulse is lower than the energy for the charge pulse, wherein the last pulse of the charging is a discharge pulse. After a resting period, estimate, using the set of sensors 12 and the traction voltage component 20 and a relaxed voltage estimator, an at least partly relaxed discharge open circuit voltage of the one group from a voltage increase caused by the charging. Repeating the steps of charging and estimating after a resting period until the estimated relaxed open circuit voltage of the one group reaches to or exceeds a predetermined operational voltage limit. Repeating the steps for all groups of electrical energy storage packs until each electrical energy storage pack have a relaxed open circuit voltage equal to or exceeding the predetermined operational voltage limit.

**FIG. 8** is a flow chart of an exemplary method to charge an electrical energy storage system comprising more than one electrical energy storage packs connected to a traction voltage bus of a vehicle according to one example.

The method includes step S102 of charging the electrical energy storage system until a charge rate of any one of the electrical energy storage packs drops below a threshold level.

Step S 104 includes grouping the electrical energy storage packs according to their charge rates, where the charge rates in each group have an intra group spread less than a predetermined margin,

Step S106 includes disconnecting all but one group of electrical energy storage packs from charging.

Step S108 includes charging the one group with at least one sequence of a charge pulse followed by a discharge pulse for a predetermined time duration for each pulse, the energy of the discharge pulse is lower than the energy for the charge pulse, wherein the last pulse of the charging is a discharge pulse.

Step S 110 includes, after a resting period, estimating with a relaxed voltage estimator, an at least partly relaxed discharge open circuit voltage of the one group from a voltage increase caused by the charging step.

Steps S 108 and S 110 are repeated until the estimated relaxed discharge open circuit voltage of the one group reaches to or exceeds a predetermined operational voltage limit.

Further, steps S 106-S 110 are repeated for all groups of electrical energy storage packs until each electrical energy storage pack have an estimated relaxed discharge open circuit voltage equal to or exceeding the predetermined operational voltage limit.

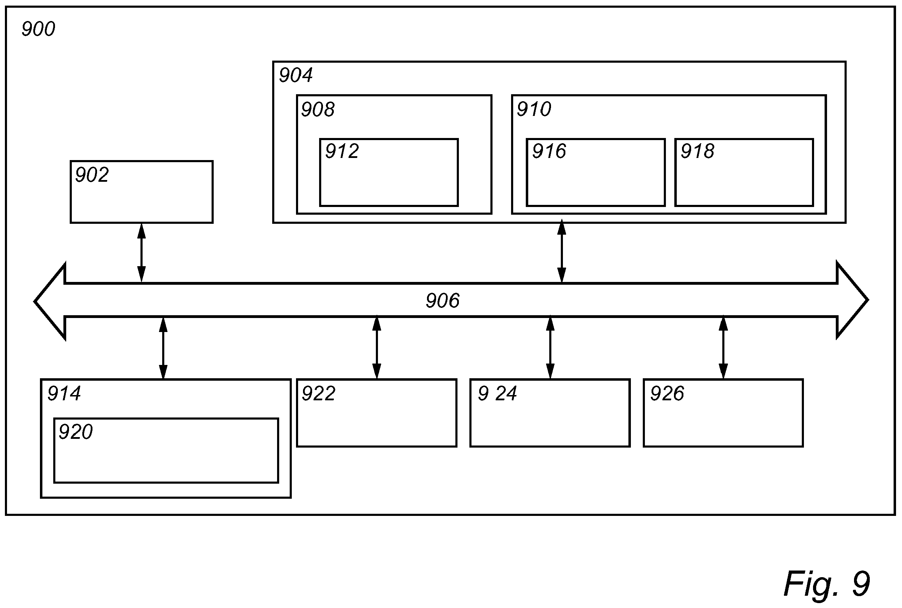

**FIG. 9** is a schematic diagram of a computer system **900** for implementing examples disclosed herein. The computer system **900** is adapted to execute instructions from a computer-readable medium to perform these and/or any of the functions or processing described herein. The computer system **900** may be connected (e.g., networked) to other machines in a LAN, an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include a processor device **902** (may also be referred to as a control unit), a memory **904,** and a system bus **906.** The computer system **900** may include at least one computing device having the processor device **902.** The system bus **906** provides an interface for system components including, but not limited to, the memory **904** and the processor device **902.** The processor device **902** may include any number of hardware components for conducting data or signal processing or for executing computer code stored in memory **904.** The processor device **902** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processor device **902** (e.g., via a circuit or any other wired, wireless, or network connection) and may include computer code for executing one or more processes described herein. The memory **904** may include non-volatile memory **908** (e.g., read-only memory (ROM), erasable programmable read-only memory (EPROM), electrically erasable programmable read-only memory (EEPROM), etc.), and volatile memory **910** (e.g., random-access memory (RAM)), or any other medium which can be used to carry or store desired program code in the form of machine-executable instructions or data structures and which can be accessed by a computer or other machine with a processor device **902.** A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **914** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **914** and/or in the volatile memory **910,** which may include an operating system **916** and/or one or more program modules **918.** All or a portion of the examples disclosed herein may be implemented as a computer program product **920** stored on a transitory or non-transitory computer-usable or computer-readable storage medium (e.g., single medium or multiple media), such as the storage device **914,** which includes complex programming instructions (e.g., complex computer-readable program code) to cause the processor device **902** to carry out the steps described herein. Thus, the computer-readable program code can comprise software instructions for implementing the functionality of the examples described herein when executed by the processor device **902.** The processor device **902** may serve as a controller or control system for the computer system **900** that is to implement the functionality described herein.

The computer system **900** also may include an input device interface **922** (e.g., input device interface and/or output device interface). The input device interface **922** may be configured to receive input and selections to be communicated to the computer system **900** when executing instructions, such as from a keyboard, mouse, touch-sensitive surface, etc. Such input devices may be connected to the processor device **902** through the input device interface **922** coupled to the system bus **906** but can be connected through other interfaces such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g., a liquid crystal display (LCD) or a cathode ray tube (CRT)). The computer system **900** may also include a communications interface **926** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer-implemented method for charging an electrical energy storage system (2) comprising more than one electrical energy storage pack (14) connected to a traction voltage bus (16) of a vehicle, the method comprising:
charging (S102) the electrical energy storage system (2) until a charge rate of any one of the electrical energy storage packs drops below a threshold level;
grouping (S104) the electrical energy storage packs according to their charge rates, where the charge rates in each group has an intra group spread less than a predetermined margin,
(a) disconnecting (S106) all but one group of electrical energy storage packs from charging;
(b) charging (S108) the one group with at least one sequence of a charge pulse (610) followed by a discharge pulse (612) for a predetermined time duration for each pulse, the energy of the discharge pulse is lower than the energy for the charge pulse, wherein the last pulse of the charging is a discharge pulse,
(c) after a resting period, estimating (S 110) with a relaxed voltage estimator (28), an at least partly relaxed discharge open circuit voltage of the one group from a voltage increase caused by the charging step,
(d) repeating steps (b), and (c) until the estimated relaxed discharge open circuit voltage of the one group reaches to or exceeds a predetermined operational voltage limit, and
(e) repeating (S112) the steps (a)-(d) for all groups of electrical energy storage packs until each electrical energy storage pack have an estimated relaxed discharge open circuit voltage equal to or exceeding the predetermined operational voltage limit.

2. The method according to claim 1, comprising, once the estimated relaxed discharge open circuit voltage of the one group reaches to or exceeds the predetermined operational voltage limit:
determining a final relaxed discharge open circuit voltage of each electrical energy storage pack of the one group,
wherein, if the final relaxed discharge open circuit voltage under- or overshoot the predetermined operational voltage limit with more than a set margin, retuning the relaxed voltage estimator for each electrical energy storage pack of the one group, and repeating the retuning for each electrical energy storage pack in all groups in step (e).

3. The method according to any one of claims 1 and 2, wherein the charge rate threshold level is that any one electrical energy storage packs drop to about 50% or less than the charge rate of at least one of the other electrical energy storage packs.

4. The method according to any one of claims 1 and 2, wherein the charge rate threshold level is an absolute charge rate level.

5. The method according to any one of the preceding claims, wherein the discharge pulses are provided every about 10s-30s.

6. The method according to any one of the preceding claims, wherein each discharge pulse is applied with about 0.1C to 1C for less than a time duration in the range of 1s to 2s.

7. The method according to any one of the preceding claims, wherein the predetermined margin is that the intragroup spread is equal to or less than about 5% in charge rate.

8. The method according to any one of the preceding claims, wherein a charge energy of the charge pulse contains at least 5 times more energy than the discharge energy of the discharge pulse.

9. The method according to any one of the preceding claims, wherein charging (S102) the electrical energy storage system (2) until a charge rate of any one of the electrical energy storage packs drops below a threshold level comprises charging using constant current constant voltage (CCCV) charging.

10. A system (10) configured to charge an electrical energy storage system (2) comprising more than one electrical energy storage pack (14) connected to a traction voltage bus (16) of a vehicle (1), the system comprising:
a set of sensors (12) configured to measure a voltage of the electrical energy storage packs individually or in groups of electrical energy storage packs;
a switching arrangement (18) configured to control which of the electrical energy storage packs are connected to the traction voltage bus (16);
a traction voltage component (20) connected to the traction voltage bus (16) and being controllable to discharge the electrical energy storage packs;
a charger (22) configured to electrically charge the electrical energy storage packs (14),
wherein the system is configured to:
charge, using the charger (22), the electrical energy storage system (2) until a charge rate of any one of the electrical energy storage packs (14) measured by the sensors (12) drops below a threshold level;
(a) disconnect, using the switching arrangement (18), all but one group of electrical energy storage packs (14) from the traction voltage bus (16), where the charge rates in the group have an intra group spread less than a predetermined margin,
(b) charge, using the charger (22), the one group with a charge pulse (610) followed by a discharge pulse (612) for a predetermined time duration for each pulse, the energy of the discharge pulse is lower than the energy for the charge pulse, wherein the last pulse of the charging is a discharge pulse,
(c) after a resting period, estimate, using the set of sensors (12), the traction voltage component (20) and a relaxed voltage estimator, an at least partly relaxed discharge open circuit voltage of the one group from a voltage increase caused by the charging,
(d) repeating steps (b) and (c) until the estimated relaxed open circuit voltage of the one group reaches to or exceeds a predetermined operational voltage limit, and
(e) repeating the steps (a)-(d) for all groups of electrical energy storage packs until each electrical energy storage pack have a relaxed open circuit voltage equal to or exceeding the predetermined operational voltage limit.

11. The system according to claim 10, wherein the system is further configured to:
once the estimated relaxed discharge open circuit voltage of the one group reaches to or exceeds the predetermined operational voltage limit,
determine, using the set of sensors, the traction voltage component, a relaxed voltage estimator, a final relaxed discharge open circuit voltage of each electrical energy storage pack of the one group, and if the final relaxed discharge open circuit voltage under- or overshoot the predetermined operational voltage limit with more than a set margin, retune the relaxed voltage estimator for each electrical energy storage pack of the one group, and repeating the retuning for each electrical energy storage pack in all groups.

12. A vehicle comprising the system according to any one of claims 10 and 11.

13. A computer program product comprising program code for performing, when executed by the processor device, the method of any of claims 1-9 when said program is run on a computer.

14. A non-transitory computer-readable storage medium comprising instructions, which when executed by the processor device, cause the processor device to perform the method of any of claims 1-9.

15. A control unit for controlling a charging an electrical energy storage system comprising more than one electrical energy storage packs connected to a traction voltage bus of a vehicle, the control unit being configured to perform the steps of the method according to any of claims 1-9.
